# EUROPEAN PATENT SPECIFICATION

(11) **EP 3 285 568 B1**
(45) Date of publication and mention of the grant of the patent: **21.08.2019**
(21) Application number: 16719143.6
(22) Date of filing: 19.04.2016
(51) Int. Cl.: A01K 1/015

(54) **USE OF L-FELININE TO ATTRACT CATS TO ELIMINATE IN A LITTER BOX**
VERWENDUNG VON L-FELININ ZUM ANZIEHEN VON KATZEN ZUR BENUTZUNG EINER STREUBOX
UTILISATION DE LA L-FÉLININE POUR INCITER LES CHATS À ÉLIMINER DANS UN BAC À LITIÈRE

(30) Priority: 24.04.2015 US 201562152265 P
(43) Date of publication of application: 28.02.2018
(73) Proprietor: Société des Produits Nestlé S.A., 1800 Vevey (CH)
(72) Inventor: PEREZ-CAMARGO, Gerardo, House Springs, Missouri 63051 (US); ELLIS, Jacklyn Jaye, St. Joseph, Missouri 64501 (US); MARTIN, Francois, St.Joseph, Missouri 64505 (US); MCGOWAN, Ragen Trudelle-Schwarz, St. Joseph, Missouri 64506 (US)
(74) Representative: Elkington and Fife LLP
(86) International application number: PCT/IB2016/052222
(87) International publication number: WO 2016/170475

(56) References cited:
- EP-A2- 0 280 443
- US-A- 4 263 873
- US-A- 5 415 131

## Description

### BACKGROUND

The present disclosure relates generally to compositions, methods and devices that use L-Felinine to attract cats to eliminate in a litter box. More specifically, the present disclosure is directed to litters containing L-Felinine, litter boxes containing L-Felinine, compositions containing L-Felinine that can be added to a litter and/or a litter box, and devices for adding L-Felinine to a litter and/or a litter box.

Litter boxes are used by cats for elimination of urine and fecal matter. A litter box contains a layer of cat litter that receives the urine and fecal matter. The cat litter is granular and absorbent to facilitate formation of clumps after the urine and fecal matter is deposited in the cat litter. The clumps are typically sifted from the litter box using a litter scoop and then discarded.

House soiling, also known as inappropriate elimination or out-of-box elimination ("OOB"), is a significant behavioral issue for pet owners. The soiling of the house can become intolerable for the pet owner and undermine the human-pet bond. Frequently, the situation results in the relinquishment of the cat to a shelter. Shelters know that finding homes for cats with OOB issues is difficult, and such cats are often euthanized. In this regard, OOB elimination behaviors actually lead to the death of more cats than any other behavioural issue and many feline diseases. US 5 415 431 relates to pheromone containing animal litter preparations. US 4 263 873 relates to animal litter comprises a cellulose litter material that contains a pheromone-like attractant substance which makes the litter attractive to animals seeking a place to defecate and/or urinate. EP 0 280 443 repellent composition e.g. for repelling deer comprises a synthetic blend of components which are characteristic of the acid fraction obtained by a Soxhlet extraction of lion faeces followed by separation into basic, neutral and acid fractions; and felinine.

Traditional treatments for house soiling include: changing the litter daily, adding more litter boxes, ceasing punishment of the cat, and spaying or neutering the cat (Oim & Houpt, 1988). Owners note minimal success employing these treatments, with only 37% reporting any improvement in the cat's litter box habits and even fewer (22%) reporting that the cat was "cured" of the problem behavior (Oim & Houpt, 1988).

Several products in the market claim to attract cats to the litter for elimination purposes, but such claims are unsubstantiated. For example, these products have not been tested in an unbiased and scientific manner or these products might attract cats generally but not in the context of urine or fecal elimination.

### SUMMARY

L-Felinine (2-amino-7-hydroxy-5, 5-dimethyl-4-thiaheptanoic acid) has been identified in the urine of several members of the Felidae family, including the domestic cat (*Felis catus*) (Hendriks et al., 1995; Hendriks et al., 2004; Miyazaki et al., 2006; Rutherfurd et al., 2007). L-Felinine is believed to be a pheromone precursor. Pheromones are chemicals excreted by one individual that influences the behavior of other members of the same species. Without being bound by theory, the present inventors believe that L-Felinine may be involved in cat chemical communication.

The inventors performed a behavioral project which tested the efficacy of 21 proposed cat attractants with 16 cats housed in a standardized environment. Some of the attractants were tested at different doses. The test evaluated the preference of the cats to eliminate urine and feces in a litter box with one attractant versus a control, namely the same substrate but without the attractant.

Only one proposed cat attractant, L-Felinine, was significantly preferred by cats for urine elimination. The effect was dose dependent, as the preference was significant at 0.2% but not at 0.05%. Cats urinated more often in the box treated with 0.2% L-Felinine in distilled water (M=1.72) compared to the unscented box (*M*=1.31; SE=0.1; F(1.45)=6.76;p=0.01). Other compounds, even compounds which have been alleged to help in-box cat urination, actually decreased the attraction for the cats to eliminate in the litter box. This effect can make the problem of out-of-box elimination even worse.

Attracting a cat to eliminate in a litter box increases the frequency of urination, which in turn reduces the risk of urinary minerals aggregating into stones or crystalizing. Therefore, L-Felinine can be used to treat, prevent or reduce the risk of a lower urinary tract disease in a cat.

Accordingly, in a general embodiment, the present disclosure provides a cat litter comprising L-Felinine, and the cat litter does not contain cat urine.

In an embodiment, the cat litter comprises a component selected from the group consisting of clays, woods, agricultural products, silica gels, and combinations thereof. The clays can be selected from the group consisting of non-swelling clays, swelling clays, and combinations thereof. The woods can be selected from the group consisting of cedar, pine, oak, maple, eucalyptus, aspen, yucca, and combinations thereof. The agricultural products can be selected from the group consisting of sunflower seed, almond, pistachio, walnut, pecan, hazelnut, peanut, acorn, wheat middlings, wheat straws, and combinations thereof.

In another embodiment, the present disclosure provides a litter box comprising L-Felinine, and the litter box does not contain cat urine.

In an embodiment, at least a portion of the L-Felinine is positioned on one or more surfaces of the litter box.

In another embodiment, the present disclosure provides a method of preventing out-of-box elimination by a cat. The method comprises using L-Felinine to attract the cat to eliminate in a litter box. The using of the L-Felinine to attract the cat to eliminate in the litter box can comprise at least one action selected from the group of (i) positioning a litter box comprising at least a portion of the L-Felinine in a building in which the cat resides; (ii) positioning a litter comprising at least a portion of the L-Felinine in a litter box located in a building in which the cat resides; (iii) applying a solution comprising at least a portion of the L-Felinine onto a litter in a litter box located in a building in which the cat resides; and (iv) applying a powder comprising at least a portion of the L-Felinine onto a litter in a litter box located in a building in which the cat resides.

In another embodiment, the present disclosure provides a method of treating out-of-box elimination. The method comprises using L-Felinine to attract a cat having an out-of-box elimination issue to eliminate in a litter box. The using of the L-Felinine to attract the cat having the out-of-box elimination issue to eliminate in the litter box can comprise at least one action selected from the group of (i) positioning a litter box comprising at least a portion of the L-Felinine in a building in which the cat resides; (ii) positioning a litter comprising at least a portion of the L-Felinine in a litter box located in a building in which the cat resides; (iii) applying a solution comprising at least a portion of the L-Felinine onto a litter in a litter box located in a building in which the cat resides; and (iv) applying a powder comprising at least a portion of the L-Felinine onto a litter in a litter box located in a building in which the cat resides.

In another embodiment, the present disclosure provides a method of preventing or reducing the risk of a lower urinary tract disease in a cat. The method comprises using L-Felinine to attract the cat to eliminate in a litter box. The using of the L-Felinine to attract the cat to eliminate in the litter box can comprise at least one action selected from the group of (i) positioning a litter box comprising at least a portion of the L-Felinine in a building in which the cat resides; (ii) positioning a litter comprising at least a portion of the L-Felinine in a litter box located in a building in which the cat resides; (iii) applying a solution comprising at least a portion of the L-Felinine onto a litter in a litter box located in a building in which the cat resides; and (iv) applying a powder comprising at least a portion of the L-Felinine onto a litter in a litter box located in a building in which the cat resides. In an embodiment, the lower urinary tract disease is selected from the group consisting of urinary plugs, struvite or oxalate stones, idiopathic cystitis, renal reflux, and combinations thereof.

In another embodiment, the present disclosure provides a method of treating a lower urinary tract disease in a cat. The method comprises using L-Felinine to attract the cat having the lower urinary tract disease to eliminate in a litter box. The using of the L-Felinine to attract the cat having the lower urinary tract disease to eliminate in the litter box can comprise at least one action selected from the group of (i) positioning a litter box comprising at least a portion of the L-Felinine in a building in which the cat resides; (ii) positioning a litter comprising at least a portion of the L-Felinine in a litter box located in a building in which the cat resides; (iii) applying a solution comprising at least a portion of the L-Felinine onto a litter in a litter box located in a building in which the cat resides; and (iv) applying a powder comprising at least a portion of the L-Felinine onto a litter in a litter box located in a building in which the cat resides. In an embodiment, the lower urinary tract disease is selected from the group consisting of urinary plugs, struvite or oxalate stones, idiopathic cystitis, renal reflux, and combinations thereof.

In another embodiment, the present disclosure provides a method of manufacturing a cat litter. The method comprises combining L-Felinine with a component selected from the group consisting of a material that absorbs cat urine, a material that controls odor from cat elimination, and a combination thereof.

In an embodiment, the component is selected from the group consisting of clays, woods, agricultural products, silica gels, and combinations thereof. The clays can be selected from the group consisting of non-swelling clays, swelling clays, and combinations thereof. The woods can be selected from the group consisting of cedar, pine, oak, maple, eucalyptus, aspen, yucca, and combinations thereof. The agricultural products can be selected from the group consisting of sunflower seed, almond, pistachio, walnut, pecan, hazelnut, peanut, acorn, wheat middlings, wheat straws, and combinations thereof.

In another embodiment, the present disclosure provides a device containing L-Felinine and configured to apply at least a portion of the L-Felinine onto at least one of a cat litter or a litter box. The device can be selected from the group consisting of a spray bottle, a sachet, a vial with a dropper pipette, and a plug-in diffuser.

In another embodiment, the present disclosure provides a kit comprising (i) a component that is at least one of a cat litter or a litter box and (ii) a composition comprising L-Felinine. In an embodiment, the kit comprises a first package that contains the component and further comprising a second package that contains the composition, and the first package is physically associated with the second package. In an embodiment, the kit comprises a device containing at least a portion of the composition and configured to apply at least a portion of the composition onto the component.

An advantage of the present disclosure is to provide cat litter formulated to reduce the risk of out-of-box feline elimination.

Another advantage of the present disclosure is to provide cat litter having appeal for a domestic cat and thus increasing the probability that the owner will keep the cat and not relinquish the cat to shelter.

A further advantage of the present disclosure is to use a naturally occurring compound to attract a cat to use a litter box.

Still another advantage of the present disclosure is to provide a behavior modification package to help a cat owner, such as a new cat adopter from a shelter, have success managing the cat's elimination behavior.

Yet another advantage of the present disclosure is to provide benefits for a cat's wellbeing and health.

Another advantage of the present disclosure is to reduce the risk for the cat developing lower urinary tract diseases like urinary plugs, struvite or oxalate stones, idiopathic cystitis, or renal reflux.

A further advantage of the present disclosure is to provide a cat litter attractant that can be easily used.

Still another advantage of the present disclosure is to provide a litter box with a cat attractant on one or more surfaces.

Yet another advantage of the present disclosure is to provide compositions that can be added to a litter and/or a litter box and to provide devices configured to add such compositions to a litter and/or a litter box.

Additional features and advantages are described herein and will be apparent from the following Detailed Description and the Figures.

### BRIEF DESCRIPTION OF THE FIGURES

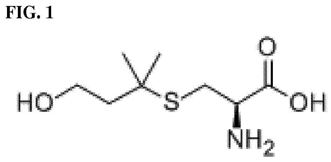

**FIG. 1** shows the chemical structure of L-Felinine.

### DETAILED DESCRIPTION

As used in this disclosure and the appended claims, the singular forms "a," "an" and "the" include plural referents unless the context clearly dictates otherwise. Thus, for example, reference to "an elimination" or "the elimination" includes two or more eliminations. The term "elimination" means urination and/or defecation by a cat.

The words "comprise," "comprises" and "comprising" are to be interpreted inclusively rather than exclusively. Likewise, the terms "include," "including" and "or" should all be construed to be inclusive, unless such a construction is clearly prohibited from the context. However, the devices and compositions disclosed herein may lack any element that is not specifically disclosed. Thus, a disclosure of an embodiment using the term "comprising" includes a disclosure of embodiments "consisting essentially of' and "consisting of' the components identified. Similarly, the methods disclosed herein may lack any step that is not specifically disclosed herein. Thus, a disclosure of an embodiment using the term "comprising" includes a disclosure of embodiments "consisting essentially of' and "consisting of' the steps identified. Any embodiment disclosed herein can be combined with any other embodiment disclosed herein.

The term "and/or" used in the context of "X and/or Y" should be interpreted as "X," or "Y," or "X and Y." Where used herein, the terms "example" and "such as," particularly when followed by a listing of terms, are merely exemplary and illustrative and should not be deemed to be exclusive or comprehensive.

All percentages expressed herein are by weight of the total weight of the composition unless expressed otherwise. As used herein, "about" is understood to refer to numbers in a range of numerals, for example the range of -10% to +10% of the referenced number, preferably within -5% to +5% of the referenced number, more preferably within -1% to +1% of the referenced number, most preferably within -0.1% to +0.1% of the referenced number.

The methods and devices and other advances disclosed herein are not limited to particular methodologies, protocols, and reagents because, as the skilled artisan will appreciate, they may vary. Further, the terminology used herein is for the purpose of describing particular embodiments only and does not limit the scope of that which is disclosed or claimed.

Unless defined otherwise, all technical and scientific terms, terms of art, and acronyms used herein have the meanings commonly understood by one of ordinary skill in the art in the field(s) of the present disclosure or in the field(s) where the term is used. Although any compositions, methods, articles of manufacture, or other means or materials similar or equivalent to those described herein can be used, the preferred devices, methods, articles of manufacture, or other means or materials are described herein.

**FIG. 1** illustrates the chemical structure of L-Felinine (2-amino-7-hydroxy-5, 5-dimethyl-4-thiaheptanoic acid). Preferably the L-Felinine used herein is in a form that is free from other components of cat urine, for example isolated L-Felinine and/or chemically synthesized L-Felinine.

An aspect of the present disclosure is a litter comprising L-Felinine. Another aspect of the present disclosure is a sealed package at least partially enclosing a litter comprising L-Felinine, for example a sealed box or a sealed bag containing such litter.

In an embodiment, the litter comprises an aqueous solution in which the L-Felinine is at least about 0.2 wt% of the solution, for example such a solution applied on the litter. Additionally or alternatively, at least a portion of the L-Felinine can be present in the litter as a powder. In a preferred embodiment, the litter does not include one or more of black currant, black seed, catnip, cat grass, chamomile, lavender, licorice, Matatabi, methalactone, 3-Mercapto-3-methylbutan-1-ol, musk, peppermint, pine (e.g. pine needle), rosemary, tom cat urine, vanillin, or white truffle oil.

As used herein, the term "litter" means any substance that can absorb animal urine and/or decrease odor from animal urine and/or feces. The litter comprising L-Felinine that is provided by the present disclosure preferably does not already contain cat urine. Non-limiting examples of suitable substances for litter include clays, woods, agricultural products (including agricultural by-products), silica gels, and combinations thereof. In an embodiment, the litter consists of natural components only and thus does not contain non-naturally occurring components. The term "natural components" includes chemically synthesized substances that are identical in structure to a naturally-occurring form of the substance.

Non-limiting examples of suitable clays include non-swelling clays, swelling clays, and combinations thereof. The clays can be clays that are obtained directly by mining natural clay deposits, synthetic clays, or clays that are derived from the agglomeration of clay particles, e.g., clay particles produced, by litter or other manufacturing processes that involve the use of clays.

Non-swelling clays include kaolinites, illites, ventriculites, attapulgites, sepiolites, and non-swelling smectites. In preferred embodiments, the non-swelling clays are rich in the following clay minerals: palygorskite-sepiolite, kaolinite, dickite, nacrite, illite, glauconite, celadonite, and phengite. Most preferably, the non-swelling clays comprise the clay minerals Ca-montmorillonite, kaolinite, and illite.

Swelling clays include smectites and swelling forms of kaolinites, illites, and vermiculites. In preferred embodiments, the swelling clays contain one or more of hectorite, beidelite, montmorillonite, nontronite, saponite, sauconite, vermiculite, and halloysite. More preferably, the clay is bentonite, e.g., a Na-montmorillonite (Na-bentonite). Generally, bentonite is a naturally occurring combination of clay minerals and some non-clay mineral constituents. Na-bentonite is rich in Na-montmorillonite but may also include other clay and some non-clay mineral constituents. In various embodiments, the swelling clays comprise Na-montmorillonite, hectorite, and vermiculite.

When used in combination, the non-swelling and swelling clays can be mixed in any amount suitable for forming the animal litters. Generally, the non-swelling and swelling clays can be mixed in amounts from about 10 to about 90% non-swelling clay and from about 90 to about 10% swelling clay.

Non-limiting examples of suitable woods include cedar, pine, oak, maple, eucalyptus, aspen, yucca, and combinations thereof. In preferred embodiments, the woods comprise cedar, pine, or combinations thereof. In various embodiments, the pine is New Zealand Pine or Southern Yellow Pine, and the cedar is Western Red Cedar. The woods can have any form suitable for functioning as an animal litter, e.g., chips, particles, pellets, crumbled pellets, or crumbles. In preferred embodiments, the woods are cedar, pine, or a combination thereof.

Non-limiting examples of suitable agricultural products include alfalfa, corn, corn stalk, corn flour, oat hull, oat stalk, oat flour, barley hull, barley meal, barley stalk, barley flour, wheat hull, wheat straw, wheat flour, soybean hull, soybean meal, soybean floor, rye hull, rye meal, rye straw, rye flour, rice straw, rice hull, sorghum straw, sorghum hull, sunflower seeds, and combinations thereof. In some embodiments, the agricultural products comprise plant material, such as bamboo, lemongrass, switchgrass, catnip, oregano, parsley, rosemary, sage, thyme, valerian root, alyssum, chrysanthemum, honeysuckle, hops, lavender, apples, berries, orange peels, orange pulp, sunflower hulls, coffee, tea, or combinations thereof. In other embodiments, the agricultural products comprise sawdust, paper, cellulose, corncob, corn kernel, Distillers Dried Grain (DDG), corn pellet, oaf pellet, barley pellet, wheat middlings, soybean pellet, rye pellet, rice grain, rice pellet, sorghum grain, sorghum pellet, or combinations thereof. In still other embodiments, the agricultural products comprise sunflower seed, almond, pistachio, walnut, pecan, hazelnut, peanut, acorn, wheat middlings, wheat straws, or combinations thereof.

In a preferred embodiment, the agricultural products comprise wood and corncob. In a more preferred embodiment, the agricultural products comprise cedar, pine, and corncob.

A further aspect of the present disclosure is a litter box comprising L-Felinine. The term "litter box" means any apparatus that can hold litter, for example a container with a bottom wall and one or more side walls, and/or is configured for litter to be positioned thereon, for example a mat or a grate. As a non-limiting example, a litter box may be a rectangular box having side walls that have a height of at least about six inches. The litter box comprising L-Felinine that is provided by the present disclosure preferably does not already contain cat urine. Another aspect of the present disclosure is a sealed package at least partially enclosing a litter box comprising L-Felinine, for example a sealed box or a sealed bag containing such a litter box.

For example, the L-Felinine can be applied to one or more surfaces of the litter box. In an embodiment, the L-Felinine is applied as an aqueous solution in which the L-Felinine is at least about 0.2 wt% of the solution. At least a portion of the L-Felinine can be adhered to one or more surfaces of the litter box, for example by a material with which the L-Felinine is associated, such as an oil or wax matrix that preferably crystallizes at a temperature above room temperature

(e.g. 40 degrees Celsius) and thus is solid at room temperature. In such an embodiment, the L-Felinine can be applied to one or more surfaces of the litter box by mixing the L-Felinine with the material in a fluid condition, then the resultant mixture can be applied to the one or more surfaces (e.g. by spray coating), and then the mixture can cool and solidify on the one or more surfaces to position the L-Felinine in the litter box. Any method of applying a substance to a litter box known by the skilled artisan can be used, and the present disclosure is not limited by the example methods disclosed herein.

Yet another aspect of the present disclosure is a device containing L-Felinine and configured to apply at least a portion of the L-Felinine onto a litter and/or a litter box. In an embodiment, the L-Felinine in the device is an aqueous solution in which the L-Felinine is at least about 0.2 wt% of the solution. Additionally or alternatively, at least a portion of the L-Felinine can be in a powder.

For example, the device can be a spray bottle containing L-Felinine and configured to spray at least a portion of the L-Felinine from a nozzle of the bottle onto a litter and/or a litter box, for example in response to a user depressing a section of the bottle. As another example, the device can be a sachet (e.g., a small disposable bag or pouch, for example made of cellophane) containing L-Felinine and from which at least a portion of the L-Felinine can be poured onto a litter and/or a litter box. As yet another example, the device can be a plug-in diffuser containing L-Felinine, comprising a plug that can be inserted in an electrical outlet adjacent the litter box, and configured to provide a sustained release of at least a portion of the L-Felinine over at least one week, at least two weeks, at least three weeks, at least a month or longer. As a further example, the device can be a vial containing L-Felinine, and a dropper pipette can be used to apply at least a portion of the L-Felinine onto a litter and/or a litter box, such as a dropper pipette connected to a lid of the vial.

Another aspect of the present disclosure is methods for a human (e.g., the cat owner) to use L-Felinine, for example methods for the human to use one or more of the compositions and devices disclosed herein. For example, such methods can involve the human using one or more of a cat litter comprising L-Felinine, a litter box comprising L-Felinine, or a device containing L-Felinine and configured to apply at least a portion of the L-Felinine onto a litter and/or a litter box.

Such methods can manage animal waste, such as cat urine; prevent or treat cat out-of-box elimination; or treat or prevent lower urinary tract diseases in a cat, such as urinary plugs, struvite or oxalate stones, idiopathic cystitis, or renal reflux. In an embodiment, L-Felinine is used to treat a cat having an out-of-box elimination issue. As used herein, a cat that has "an out-of-box elimination issue" is a cat that has eliminated outside of the litter box at least once in the last month, and in an embodiment eliminated outside of the litter box at least once in the last week.

In an embodiment, a method of manufacturing a cat litter comprises combining L-Felinine with a component that absorbs cat urine and/or controls odor from cat elimination. Non-limiting examples of suitable litter components are disclosed above.

Yet another aspect of the present disclosure is a kit comprising one or more of the compositions and devices disclosed herein. A "kit" means that the identified components are physically associated in or with one or more containers and considered a unit for manufacture, distribution, sale, or use. Containers include, but are not limited to, bags, boxes, cartons, bottles, packages of any type or design or material, over-wrap, shrink-wrap, affixed components (e.g., stapled, adhered, or the like), or combinations thereof. A single package may be one or more containers that contain the identified components, and the one or more containers are physically associated such that they are considered a unit for manufacture, distribution, sale or use.

For example, such kits can include one or more of a cat litter comprising L-Felinine, a litter box comprising L-Felinine, or a device containing L-Felinine and configured to apply at least a portion of the L-Felinine onto a cat litter and/or a litter box. In an embodiment, the kit includes (i) a cat litter and (ii) a device containing L-Felinine and configured to apply at least a portion of the L-Felinine onto the cat litter. In another embodiment, the kit includes (i) a litter box and (ii) a device containing L-Felinine and configured to apply at least a portion of the L-Felinine onto the litter box and/or cat litter in the litter box. In another embodiment, the kit includes (i) a device containing L-Felinine and configured to apply at least a portion of the L-Felinine onto a litter box and/or a cat litter in the litter box and (ii) instructions for using the device to apply at least a portion of the L-Felinine onto a litter box and/or a cat litter in the litter box. In an embodiment, the kit can be provided as a behavior modification package to help a cat owner, such as a new cat adopter from a shelter.

### EXAMPLE

By way of example and not limitation, the following non-limiting behavioral study is illustrative of the concept of using L-Felinine as a cat attractant in litter to prevent out-of-box elimination.

### Objective

The objective of the project was to create a list of potential cat attractants and test each of the potential cat attractants to determine if the attractant, when added to the litter box, positively influenced cat elimination behavior. Similarly, the project tested the impact of cat deterrents placed in litter boxes on the elimination behavior of cats. Unscented litter was used as a control.

### Methodology

A list of potential cat attractants and deterrents was compiled. Also included on the list were a series of odoriferous substances that have been reported in the scientific and lay literature or on various online pet forums to have potential attractive or repulsive properties. The study tested if these substances actually can attract cats in the context of elimination. All substances were screened for cat safety before being tested.

Sixteen cats were involved in the study. Cats were over 1 year of age and with a 50/50 gender distribution. All cats had been previously tested to ensure no side bias. The study used a preference test which was a 4-day test where two litter boxes containing two different products were presented to the test cats in a paired comparison design ("A-B-B-A" design). Presence and location of urine and feces in the boxes are noted daily. During the test, cats are housed individually in condos. All condos were identical, with a floor area of about 5 x 5 feet and 10 feet high. All condos had the same temperature and airflow, around 12 volumes per hour. Condos were environmentally enriched, with shelves to use vertical space, hammocks, feeding and drinking area, toys and windows on all four sides with natural light.

When testing a liquid or a spray, distilled water was used as control. Distilled water was used to dilute substances when needed. No controls were used when testing powders. Substances were applied to the litter daily. On some occasions, tests were run with hooded and non-hooded litter boxes. Both types of boxes were used to see if controlling the dispersal of the additive by using a hood on the box would make a difference. Analysis of variance was used to test for differences in defecation and urination events between scented and unscented boxes.

### Tested Substances and Results

**Black Currant Oil or Juice:** Black currant (*Ribes nigrum*) is a shrub grown for its fruit, which is used, among other things, for juice, jam, oil, and in perfumery. The flowers and berries have a characteristic "cat pee" odor. People report that cats will urinate on or next to black currant bushes.

Cat litter with 1 ml of black currant seed oil (1% dilution) was tested. Cats defecated less often in the scented box (*M*=0.75) compared to the unscented box (*M*=1.28; *SE*=0.12; *F*(1,45)=10.5, *p*=0.002). There was no difference in urination events between the scented box (*M*=1.5) and the unscented box (*M*=1.44; *SE*=0.13; *F*(1,45)=0.12, *p*=0.73).

Cat litter with 1 ml of black currant seed oil (10% dilution) was tested. Cats defecated less often in the scented box (*M*=0.59) compared to the unscented box (*M*=1.3; *SE=0.13; F*(1,45)=16.16, *p*=0.0002). Cats urinated less often in the scented box (*M*=1.03) compared to the unscented box (*M*=1.5; *SE=0.13; F*(1,45)=6.45, *p*=0.01).

Cat litter with 1 ml of black currant juice (10% dilution) was tested. There was no difference in defecation events between the scented box (*M*=1.12) and the unscented box (*M*=1.09; *SE*=0.13; *F*(1,45)=0.03, *p*=0.87). There was no difference in urination events between the scented box (*M*=1.66) and the unscented box (*M*=1.5; *SE*=0.11; *F*(1,45)=0.73, *p*=0.4).

**Black seed oil:** Black seed (*Nigella sativa*) is an annual plant commonly used in traditional systems of medicine. The plant is native of Southern Europe, North Africa, and Southwest Asia. The seeds and their oil are part of the treatment of multiple ailments. The seeds are also used in foods as a flavoring additive.

Cat litter with 1 ml of black seed oil (1% dilution) was tested. There was no difference in defecation events between the scented box (*M*=1.0) and the unscented box (*M=*0.94; *SE*=0.13; *F*(1,45)=0.11, *p*= 0.74). There was no difference in urination events between the scented box (*M*=1.53) and the unscented box (*M*=1.31); *SE* = 0.12; *F*(1,45)=1.76, *p*=0.19).

Cat litter with 1 ml of black seed oil (10% dilution) was tested. Cats defecated less often in the scented box (*M*=0.47) compared to the unscented box (*M*=1.31; *SE*=0.11; *F*(1,45)=28.26, *p* <0.0001). There was no difference in urination events between the scented box (*M*=1.03) and the unscented box (*M*=1.34; *SE*=0.12; *F*(1,45)=3.22, *p*=0.08).

**Catnip:** Catnip comes from the plant *Nepeta cataria.* It is a commonly cultivated garden plant and is used fresh, dried, or in oil form. Catnip appears to be very appealing to some cats, but not all cats react to catnip (about 20% are nonreactive). The active ingredient found in catnip is nepetalactone.

Cat litter with 1 ml of catnip oil (0.01% dilution) was tested. There was no difference in defecation events between the scented box (*M*=0.87) and the unscented box (*M*=1.09; *SE*=0.16; *F*(1,45)=0.92, *p*=0.34). There was no difference in urination events between the scented box (*M*=1.34) and the unscented box (*M*=1 .56; *SE*=0.13; *F*(1,45)=1.39, *p*=0.24).

Cat litter with 3 sprays of Kong® Natural Catnip spray (32 cats used for this test) was tested. Cats eliminated less often in the box sprayed with catnip (*M*=0.87) than in the unscented box (*M*=1.8; *SE*=0.13; *F*(1, 90)=24.16; *p*<0.001). Cats eliminated less often in the box sprayed with catnip (M=1.39) than in the unscented box (*M*=2.94; *SE*=0.13; *F*(1,90)=78.32; *p*<0.001).

**Cat Grass:** "Cat grass" is often cultivated in pots by cat owners. Many cats seem to enjoy eating it. Several plants are commonly referred to as "cat grass," such as *Dactylitis glomerata*, *Avena sativa* and *Triticum aestivum.* The "cat grass" that was tested in this project is the cereal grain barley (*Hordeum vulgare L. varigate*).

The tests used both hooded and non-hooded litter boxes, but the results were not different between the hooded box and non-hooded box, so the data were pooled (N=32) for analysis.

Cat litter with 1/4 tablespoon of powered cat grass was tested. Cats defecated less often in the scented box (*M*=0.27) compared to the unscented box (*M*=1.64; *SE*=0.07; *F*(1,93)=182.89; *p*<0.0001). Cats urinated less often in the scented box (*M*=0.77) compared to the unscented box (*M*=1.78; *SE*=0.08; *F*(1,93)=74.46; *p*<0.0001).

Cat litter with 1/2 tablespoon of powered cat grass was tested. Cats defecated less often in the scented box (*M*=0.44) compared to the unscented box (*M*=1.5; *SE*=0.08; *F*(1,93)=81.3; *p*<0.0001). Cats urinated less often in the scented box (*M*=0.8) compared to the unscented box (*M*=1.72; *SE*=0.08; *F*(1, 93)=59.77; *p*<0.0001).

Cat litter with 1 tablespoon of powered cat grass was tested. Cats defecated less often in the scented box (*M*=0.47) compared to the unscented box (*M*=1.34; *SE*=0.08; *F*(1,93)=52.49; *p* <0.0001). Cats urinated less often in the scented box (*M*=0.75) compared to the unscented box (*M*=1.81; *SE*=0.07; *F*(1,93)=109.93; *p*<0.0001).

**Chamomile:** *Matricaria chamomilla* is a native annual plant of southern and eastern Europe. Chamomile is a common medicinal plant used in folk and traditional medicine. In addition, the oil of the plant is used in perfumery, cosmetic, aromatherapy, and in the food industry.

Cat litter with 1 ml of natural extract of chamomile (10% dilution) was tested. There was no difference in defecation events between the scented box (*M*=1.28) and the unscented box (*M*=1.12; *SE*=0.16; *F*(1,45)=0.48; *p*=0.49). There was no difference in urination events between the scented box (M=1.37) and the unscented box (*M*=1.53; *SE*=0.13; *F*(1,45)=0.72; *p*=0.4).

**Dr. Elsey's® Ultra Litter Attractant:** The manufacturer states the following:
"Precious Cat Ultra Litter Attractant Additive works by emitting a scent that naturally attracts cats and kittens to use the litter box. Many cats are abandoned or abused because they do not adapt to using a litter box early in ownership. This product is designed for cats that are currently not using their litter boxes. Precious Cat Litter Attractant is the only litter attractant to provide a clinically tested and consumer proven solution."

Cat litter with 7 oz. of this substance was tested. There was no difference in defecation events between the box with the attractant (*M*=1.0) and the box without attractant (*M*=1.22; *SE*=0.14; *F*(1,45)=1.3; *p*=0.26). Cats urinated less often in the box with the attractant (*M*=1.5) compared to the box without the attractant (*M*=1.84; *SE*=0.09; *F*(1,45)=7.53; *p*=0.009).

**Feliway®:** This substance is a synthetic feline pheromone spray which is marketed to reduce out-of-box urination. While introducing Feliway® to the environment may help put a cat at ease, and thus encourage litter box use, applying Feliway® directly to the litter may actually deter cats from using the box. People have reported that spraying this product in a spot where their cat has been eliminating reduces future soiling of that spot. The manufacturer states the following:
"Feliway is a synthetic copy of the feline facial pheromone, used by cats to mark their territory as safe and secure. By mimicking the cat's natural facial pheromones, Feliway creates a state of familiarity and security in the cat's local environment. As a result, Feliway can be used to help comfort and reassure cats while they cope with a challenging situation and help prevent or reduce the stress caused by a change in their environment."

Cat litter with 3 sprays of this substance was tested. There was no difference in the number of fecal events between the box sprayed with Feliway® (*M*=0.84) compared to the unscented box (*M*=1.19; *SE*=0.14; *F*(1,45)=3.25; *p*=0.07). Cats urinated less often in the box sprayed with Feliway® (*M*=1.19) compared to the unscented box (*M*=1.56; *SE*=0.1; *F*(1,45)=6.55; *p*=0.01).

**Lavender:** Lavender (*Lavandula sp.*) is a commonly grown garden plant believed to repel cats. However, some cat owners report that their cats are attracted to lavender and react to it in a way similar to catnip.

Cat litter with 1 ml of natural extract of lavender (10% dilution) was tested. There was no difference in the number of fecal events between the scented box (M=1.0) and the unscented box (*M*=0.78; *SE*=0.14; *F*(1,45)=1.28; *p*=0.26). There was no difference in urination events between the scented box (*M*=1.53) and the unscented box (*M*=1.59; *SE*=0.12; *F*(1,45)=0.15, *p*=0.7).

**L-Felinine:** L-Felinine (2-amino-7 -hydroxy-5, 5-dimethyl-4-thiaheptanoic acid) has been identified in the urine of several members of the Felidae family, including the domestic cat (*Felis catus*)*.* L-Felinine is believed to be a pheromone precursor.

Cat litter with 1 ml of L-Felinine (0.05% dilution) was tested. There was no difference in the number of fecal events between the scented box (*M*=1.16) and the unscented box (*M*=1.1; *SE*=0.14; *F*(1,45)=0.23; *p*=0.63). There was no difference in urination events between the scented box (*M*=1.41) and the unscented box (*M*=1.66; *SE*=0.12; *F*(1*,* 45)=2.25; *p*=0.14)*.*

Cat litter with 1 ml of L-Felinine (0.20% dilution) was tested. There was no difference in the number of fecal events between the scented box (*M*=1.03) and the unscented box (*M*=0.91; *SE*=0.13; *F*(1,45)=0.46; *p*=0.5). Cats urinated more often in the box treated with L-Felinine (*M*=1.72) compared to the unscented box (*M*=1.31; *SE*=0.1; *F*(1,45)=6.76; *p*=0.01).

**Licorice:** Licorice by itself or in combination with other compounds, is a known lure for attracting wildlife (e.g., bobcat, raccoon, muskrats, deer). In addition, some cat owners report that their cats are attracted to licorice scent.

Cat litter with 1 ml of licorice (10% dilution) was tested. There was no difference in the number of fecal events between the scented box (*M*=1.12) and the unscented box (*M*=1.41; *SE*=0.13; *F*(1,45)=2.37; *p*=0.13). There was no difference in urination events between the scented box (*M*=1.44) and the unscented box (*M*=1.47; *SE*=0.12; *F*(1,45)=0.03; *p*=0.85).

**Matatabi:** Matatabi (*Actinidia polygama*), also known as silver vine, is a vine from China and Japan. Cats are attracted to its leaves, and its effects on cats are reported to be similar to those of catnip.

This product was tested using both hooded and non-hooded litter boxes, but there was no difference between the hooded box and non-hooded box tests, the data was pooled (N=32) for analysis. However, there were only three days of data available for the hooded litter box test. Thus, in order to be able to pool the data for both tests, the mean number of fecal and urine events was used for the analysis (instead of total number events).

Cat litter with 1 tablespoon of Matatabi was tested. Cats eliminated less often in the box with Matatabi (*M*=0.22) compared to the box with no additive (*M*=0.69; *SE*=0.04; *F*(1,93)=59.88; *p*<0.0001). Cats urinated less often in the box with Matatabi (*M*=0.4) compared to the box with no additive (*M*=0.87; *SE*=0.04; *F*(1,93)=64.62; *p*<0.0001).

**Methalactone:** Menthalactone, or mint lactone, has an herbaceous minty aroma. Menthalactone comes from the leaves of *Mentha cordifolia* Opiz. Some species of the Mint family are known to attract cats.

Cat litter with 1 ml of Menthalactone (1% dilution) was tested. There was no difference in the number of fecal events between the scented box (*M*=0.84) and the unscented box (*M*=1.12; *SE*=0.14; *F*(1,45)=0.191; *p*=0.17). There was no difference in urination events between the scented box (M=1.53) and the unscented box (*M*=1.5; *SE*=0.12; *F*(1,45)=0.04; *p*=0.85).

**MMB:** 3-Mercapto-3-methylbutan-1-ol (MMB) is a degradation product of felinine in cat urine and is a putative cat pheromone. Therefore, MMB may act as a cat attractant.

Cat litter with 1 ml of MMB (1% dilution) was tested. There was no difference in the number of fecal events between the scented box (*M*=0.84) and the unscented box (*M*=1.16; *SE*=0.13; *F*(1,45)=2.69; *p*=0.11). Cats urinated less often in the box sprayed with MMB (*M*=1.22) compared to the control box (*M*=1.69; *SE*=0.11; *F*(1,45)=8.62; *p*=0.005).

**Musk oil perfume:** Musk is common ingredient in perfumes. It is believed that musky aroma may have cat appeal. Many wild and feral cat lures include natural musk as a presumed cat attractant.

Cat litter with 3 sprays of musk oil perfume was tested. There was no difference in the number of fecal events between the scented box (*M*=0.97) and the unscented box (*M*=1.22; *SE*=0.14; *F*(1,45)=1.61; *p*=0.21). Cats urinated less often in the scented box (*M*=1.31) compared to the control box (*M*=1.62; *SE*=0.11; *F*(1,45)=4.29; *p*=0.04).

**Calvin Klein® Obsession® for Men cologne:** Reportedly, big cats in the wild are attracted to this cologne, and it is often used as an enrichment tool in zoos. This test investigated whether domestic cats might also be attracted to this fragrance and whether the attraction that has been reported in a social/exploratory context would translate to an elimination context.

Cat litter with 1 spray was tested. Cats defecated less often in the box sprayed Obsession® (*M*=0.87) compared to the control box (*M*=1.25; *SE*=0.13; *F*(1,45)=4.58; *p*=0.03)*.* Cats urinated less often in the box sprayed with Obsession® (*M*=1.25) compared to the control box (*M*=1.59; *SE*=0.14; *F*(1,45)=5.02; *p*=0.03).

Cat litter with 3 sprays was tested. Cats defecated less often in the box sprayed Obsession® (*M*=0.53) compared to the control box (*M*=1.41; *SE*=0.13; *F*(1,45)=24.0; *p<0.001).* Cats urinated less often in the box sprayed with Obsession® (*M*=1.16) compared to the control box (*M*=1.66; *SE*=0.13; *F*(1,45)=7.71; *p*<0.001).

**Peppermint:** Peppermint (*Mentha piperita L*) is related to catnip, a plant known to attract cats. As noted above, anecdotal evidence suggests that cats may be attracted to several plants from the mint family.

Cat litter with 1 ml of peppermint (10% dilution) was tested. There was no difference in the number of fecal events between the scented box (*M*=0.91) compared to the unscented box (*M*=1.12; SE=0.14; *F*(1,45)=1.15; *p*=0.29). There was no difference in urination events between the scented box (*M*=1.44) and the unscented box (*M*=1.41; *SE*=0.12; *F*(1,45)=0.04; *p*=0.85).

**Pine Needle Oil:** It was posited that cats may show a preference for eliminating in a pine fragranced area because of the number of pine-based litter products on the market. On the other hand, many popular cat web sites list pine as an odor disliked by cats.

Cat litter with 3 drops of pure pine needle oil was tested. Cats defecated less often in the box with Pine Needle Oil (*M*=0.37) compared to the unscented box (*M*=1.41; *SE*=0.11; *F*(1,45)=37.73; *p*<0.001). Cats urinated less often in the box with Pine Needle Oil (*M*=1.0) compared to the unscented box (*M*=1.66; *SE*=0.11; *F*(1, 45)=17.93; *p*<0.001).

**Rosemary:** Rosemary (*Rosmarinus officinalis*) is a commonly grown garden plant believed to repel cats.

Cat litter with 1 ml of rosemary (10% dilution) was tested. There was no difference in the number of fecal events between the scented box (*M*=1.13) compared to the unscented box (*M*=1.03; *SE*=0.14; *F*(1,42)=0.25; *p*=0.62). There was no difference in urination events between the scented box (*M*=1.57) and the unscented box (*M*=1.63; *SE*=0.1; *F*(1,42)=0.2; *p*=0.65).

**Tom Cat Urine:** Studies report that tom cat urine can be used a lure to trap feral cats, attracting them to the trap. Sulfur accounts for the strong distinctive smell of tom cat urine. A study found that both males and females sniff tom cat urine emitted from a squatting position to empty the bladder, differentiating it from spraying or marking.

Cat litter with 1 ml of tom cat urine (collected from intact males, refrigerated overnight and used whole) was tested. Despite a trend, there were no differences in the frequency of fecal events between the scented box (*M*=0.72) and the unscented box (*M*=1.09; *SE*=0.13; *F*(1,45)=3.96; *p*=0.052). Cats urinated less often in the scented box (*M*=1.19) compared to the unscented box (*M*=1.66; *SE*=0.13; *F*(1,45)=6.58; *p*=0.01).

**Vanillin:** Vanillin, by itself or in combination with other compounds, is used as a lure by hunters to attract wildlife (e.g., raccoon, muskrats, deer). Anecdotal accounts from cat owners describe their cat's attraction to vanilla.

Cat litter with 1 ml of vanillin (10% dilution) was tested. Cats defecated less often in the scented box (*M*=0.75) compared to the unscented box (*M*=1.25; *SE*=0.13; *F*(1,45)=6.86; *p*<0.01). There was no difference in urination events between the scented box (*M*=1.41) and the unscented box (*M*=1.62; *SE*=0.1; *F*(1,45)=1.91, *p*=1.74).

**White Truffle Oil:** Based on an internal palatability research, white truffle oil appears to be disliked by cats. However, work by others suggests that some cats may investigate truffle oil baits.

Cat litter with 1 drop of pure white truffle oil was tested. Cats defecated less often in the box with White Truffle Oil (*M*=0.56) compared to the unscented box (*M*=1.31; *SE*=0.11; *F*(1,45)=21.82; *p*<0.001). There was no difference in the frequency of urine events between the box with White Truffle Oil (*M*=1.25) and the unscented box (*M*=1.47; *SE*=0.12; *F*(1,45)=1.53; *p*=0.22)*.*

### Conclusion

The Table at the end of the description summarizes the results obtained. In the "attractant" column, a "+" symbol indicates that the substance tested was assumed to have attractive properties; and a "- " symbol indicates that the substance was assumed to have repulsive properties. A "↓" symbol indicates that the cats eliminated less often in the scented litter box relative to the unscented litter box; a "↑" symbol indicates that the cats eliminated more often in the scented litter box relative to the unscented litter box; and a "=" symbol indicates that there were no statistically significant differences between the scented and unscented litter boxes.

21 substances believed to have attractive or repulsive characteristics for cats were tested, and some substances were tested at different intensities. A total of 29 tests were run.

L-Felinine was the only substance which led to an increase in litter box use by cats. Cats urinated more often in the box scented with L-Felinine as compared to an unscented box. This was only true at the 0.20% concentration. Despite the increased box use for urination events, L-Felinine had no impact on box use for defecation. This effect was lost at a lower concentration (0.05%), highlighting the importance the intensity level of attractants might play in their effectiveness.

Of the 26 substances/intensities tested, 12 lead to a decrease in defecation and 14 lead to a decrease in urination by cats in the treated box. Six compounds had no impact on elimination behavior at the concentrations tested. These results suggest that although some cats might be attracted to or repelled by these substances in other contexts, this attraction/repellency did not always apply to the litter context. Even if cats might have been attracted by these substances to investigate the litter box (which was not measured), they were not compelled to eliminate in the box. A perfect example of this is catnip. Many cats are attracted to catnip and show a strong behavioral response to it (rubbing, rolling, meowing, running, etc.). However, this attraction did not translate into an increase in litter box use.

We tested three substances with presumed repulsive qualities. Only the white truffle oil reduced the frequency of defecation in the scented box, compared to the unscented box. There was no effect on the frequency of urination. The other two repellants tested had no effects. The boxes scented with the repellants were used as often as the unscented boxes.

The results of this project indicate that attractants other than L-Felinine do not have the ability to make the litter box more appealing and increase its use. Substances that may be attractive to cats in other contexts (e.g., play, exploration) do not attract cats to use a litter box. In fact, in roughly half of the tests conducted in this project, cats preferred the unscented litter.

It should be understood that various changes and modifications to the presently preferred embodiments described herein will be apparent to those skilled in the art.

| | **Attractant** | **Fecal** | **Urine** |
|---|---|---|---|
| Black currant oil 1% | + | ↓ | = |
| Black currant oil 10% | + | ↓ | ↓ |
| Black currant juice 10% | + | = | = |
| Black seed oil 1% | + | = | = |
| Black seed oil 10% | + | ↓ | = |
| Catnip oil 0.01% | + | = | = |
| Catnip spray | + | ↓ | ↓ |
| Cat grass ¼ tablespoon | + | ↓ | ↓ |
| Cat grass ½ tablespoon | + | ↓ | ↓ |
| Cat grass 1 tablespoon | + | ↓ | ↓ |
| Chamomile | + | = | = |
| Dr. Elsey's attractant | + | = | ↓ |
| Feliway | - | = | ↓ |
| Lavender | - | = | = |
| L-Felinine 0.05% | + | = | = |
| L-Felinine 0.2% | + | = | ↑ |
| Licorice | + | = | = |
| Matatabi | + | ↓ | ↓ |
| Menthalactone | + | = | = |
| MMB | + | = | ↓ |
| Musk oil | + | = | ↓ |
| Obsession (standard) | + | ↓ | ↓ |
| Obsession (low) | + | ↓ | ↓ |
| Peppermint | + | = | = |
| Pine Needle Oil | + | ↓ | ↓ |
| Rosemary | - | = | = |
| Tom cat urine | + | = | ↓ |
| Vanillin | + | ↓ | = |
| White Truffle Oil | +/- | ↓ | = |

## Claims

1. A cat litter comprising L-Felinine, and the cat litter does not contain cat urine.

2. The cat litter of Claim 1, comprising a component selected from the group consisting of clays, woods, agricultural products, silica gels, and combinations thereof.

3. The cat litter of Claim 2, wherein the
- clays are selected from the group consisting of non-swelling clays, swelling clays, and combinations thereof;
- the woods are selected from the group consisting of cedar, pine, oak, maple, eucalyptus, aspen, yucca, and combinations thereof;
- the agricultural products are selected from the group consisting of sunflower seed, almond, pistachio, walnut, pecan, hazelnut, peanut, acorn, wheat middlings, wheat straws, and combinations thereof.

4. A litter box comprising L-Felinine, and the litter box does not contain cat urine, wherein at least a portion of the L-Felinine is positioned on one or more surfaces of the litter box.

5. A method of preventing out-of-box elimination by a cat, the method comprising using L-Felinine to attract the cat to eliminate in a litter box.

6. The method of Claim 5, wherein the using of the L-Felinine to attract the cat to eliminate in the litter box comprises at least one action selected from the group of (i) positioning a litter box comprising at least a portion of the L-Felinine in a building in which the cat resides; (ii) positioning a litter comprising at least a portion of the L-Felinine in a litter box located in a building in which the cat resides; (iii) applying a solution comprising at least a portion of the L-Felinine onto a litter in a litter box located in a building in which the cat resides; and (iv) applying a powder comprising at least a portion of the L-Felinine onto a litter in a litter box located in a building in which the cat resides.

7. A method of treating out-of-box elimination, the method comprising using L-Felinine to attract a cat having an out-of-box elimination issue to eliminate in a litter box.

8. The method of Claim 7, wherein the using of the L-Felinine to attract the cat having the out-of-box elimination issue to eliminate in the litter box comprises at least one action selected from the group of (i) positioning a litter box comprising at least a portion of the L-Felinine in a building in which the cat resides; (ii) positioning a litter comprising at least a portion of the L-Felinine in a litter box located in a building in which the cat resides; (iii) applying a solution comprising at least a portion of the L-Felinine onto a litter in a litter box located in a building in which the cat resides; and (iv) applying a powder comprising at least a portion of the L-Felinine onto a litter in a litter box located in a building in which the cat resides.

9. Use of L-Felinine in a cat litter
for preventing or reducing the risk of a lower urinary tract
disease in a cat, wherein the using of the L-Felinine to attract the cat to eliminate in the litter box comprises at least one action selected from the group of (i) positioning a litter box comprising at least a portion of the L-Felinine in a building in which the cat resides; (ii) positioning a litter comprising at least a portion of the L-Felinine in a litter box located in a building in which the cat resides; (iii) applying a solution comprising at least a portion of the L-Felinine onto a litter in a litter box located in a building in which the cat resides; and (iv) applying a powder comprising at least a portion of the L-Felinine onto a litter in a litter box located in a building in which the cat resides.

10. The use of Claim 9, wherein the lower urinary tract disease is selected from the group consisting of urinary plugs, struvite or oxalate stones, idiopathic cystitis, renal reflux, and combinations thereof.

11. A method of manufacturing a cat litter, the method comprising combining L-Felinine with a component selected from the group consisting of a material that absorbs cat urine, a material that controls odor from cat elimination, and a combination thereof.

12. The method of Claim 11, wherein the component is selected from the group consisting of clays, woods, agricultural products, silica gels, and combinations thereof.

13. The method of Claim 12, wherein the
- clays are selected from the group consisting of non-swelling clays, swelling clays, and combinations thereof;
- the woods are selected from the group consisting of cedar, pine, oak, maple, eucalyptus, aspen, yucca, and combinations thereof;
- the agricultural products are selected from the group consisting of sunflower seed, almond, pistachio, walnut, pecan, hazelnut, peanut, acorn, wheat middlings, wheat straws, and combinations thereof.

14. A kit comprising (i) a component that is at least one of a cat litter or a litter box; and (ii) a composition comprising L-Felinine.

15. The kit of Claim 14, comprising
- a first package that contains the component and further comprising a second package that contains the composition, and the first package is physically associated with the second package; or
- a device containing at least a portion of the composition and configured to apply at least a portion of the composition onto the component.

## Patentansprüche

1. Katzenstreu, die L-Felinin umfasst, wobei die Katzenstreu keinen Katzenurin enthält.

2. Katzenstreu nach Anspruch 1, die eine Komponente umfasst, die ausgewählt ist aus der Gruppe bestehend aus Tonen, Hölzern, landwirtschaftlichen Produkten, Kieselgelen und Kombinationen davon.

3. Katzenstreu nach Anspruch 2, wobei
- die Tone ausgewählt sind aus der Gruppe bestehend aus nichtquellenden Tonen, quellenden Tonen und Kombinationen davon;
- die Hölzer ausgewählt sind aus der Gruppe bestehend aus Zeder, Kiefer, Eiche, Ahorn, Eukalyptus, Pappel, Yukka und Kombinationen davon;
- die landwirtschaftlichen Produkte ausgewählt sind aus der Gruppe bestehend aus Sonnenblumensamen, Mandeln, Pistazie, Walnuss, Pekanuss, Haselnuss, Erdnuss, Eichel, Weizenfuttermehl, Weizenstroh und Kombinationen davon.

4. Katzentoilette, die L-Felinin umfasst, und wobei die Katzentoilette keinen Katzenurin enthält, wobei mindestens ein Teil des L-Felinins auf einer oder auf mehreren Oberflächen der Katzentoilette positioniert ist.

5. Verfahren zum Verhindern einer Ausscheidung außerhalb der Katzentoilette durch eine Katze, wobei das Verfahren das Verwenden von L-Felinin umfasst, um die Katze dazu anzuregen, in eine Katzentoilette auszuscheiden.

6. Verfahren nach Anspruch 5, wobei die Verwendung von L-Felinin zum Anregen der Katze, in die Katzentoilette auszuscheiden, mindestens eine Aktion umfasst, die aus der Gruppe ausgewählt ist bestehend aus: (i) Positionieren einer Katzentoilette, die zumindest einen Teil des L-Felinins umfasst, in einem Gebäude, in dem die Katze lebt; (ii) Positionieren einer Streu, die mindestens einen Teil des L-Felinins umfasst, in eine Katzentoilette, die sich in einem Gebäude befindet, in dem die Katze lebt; (iii) Auftragen einer Lösung, die mindestens einen Teil des L-Felinins umfasst, auf eine Streu in einer Katzentoilette, die sich in einem Gebäude befindet, in dem die Katze lebt; und (iv) Auftragen eines Pulvers, das mindestens einen Teil des L-Felinins umfasst, auf eine Streu in einer Katzentoilette, die sich in einem Gebäude befindet, in dem die Katze lebt.

7. Verfahren zum Behandeln einer Ausscheidung außerhalb der Katzentoilette durch eine Katze, wobei das Verfahren das Verwenden von L-Felinin umfasst, um eine Katze, die ein Problem mit der Ausscheidung außerhalb der Katzentoilette hat, dazu anzuregen, in eine Katzentoilette auszuscheiden.

8. Verfahren nach Anspruch 7, wobei die Verwendung von L-Felinin zum Anregen der Katze, die ein Problem mit der Ausscheidung außerhalb der Katzentoilette hat, zur Ausscheidung in die Katzentoilette mindestens eine Aktion umfasst, die aus der Gruppe ausgewählt ist bestehend aus: (i) Positionieren einer Katzentoilette, die mindestens einen Teil des L-Felinins umfasst, in einem Gebäude, in dem die Katze lebt; (ii) Positionieren einer Streu, die mindestens einen Teil des L-Felinins umfasst, in einem Gebäude, in dem die Katze lebt; (iii) Auftragen einer Lösung, die mindestens einen Teil des L-Felinins umfasst, auf eine Streu in einer Katzentoilette, die sich in einem Gebäude befindet, in dem die Katze lebt; und (iv) Auftragen eines Pulvers, das mindestens einen Teil des L-Felinins umfasst, auf eine Streu in einer Katzentoilette, die sich in einem Gebäude befindet, in dem die Katze lebt.

9. Verwendung von L-Felinin in einer Katzenstreu zum Verhindern oder Verringern des Risikos einer Erkrankung der unteren Harnwege bei einer Katze, wobei die Verwendung von L-Felinin zum Anregen der Katze, in die Katzentoilette auszuscheiden, mindestens eine Aktion umfasst, die aus der Gruppe ausgewählt ist bestehend aus: (i) Positionieren einer Katzentoilette, die mindestens einen Teil des L-Felinins umfasst, in einem Gebäude, in dem die Katze lebt; (ii) Positionieren einer Streu, die mindestens einen Teil des L-Felinins umfasst, in einem Gebäude, in dem die Katze lebt; (iii) Auftragen einer Lösung, die mindestens einen Teil des L-Felinins umfasst, auf eine Streu in einer Katzentoilette, die sich in einem Gebäude befindet, in dem die Katze lebt; und (iv) Auftragen eines Pulvers, das mindestens einen Teil des L-Felinins umfasst, auf eine Streu in einer Katzentoilette, die sich in einem Gebäude befindet, in dem die Katze lebt.

10. Verwendung nach Anspruch 9, wobei die Erkrankung der unteren Harnwege ausgewählt ist aus der Gruppe bestehend aus Harnröhrenpfropf, Struvit- oder Oxalatsteinen, idiopathischer Zystitis, Nierenrückfluss und Kombinationen davon.

11. Verfahren zum Herstellung einer Katzenstreu, wobei das Verfahren das Kombinieren von L-Felinin mit einer Komponente umfasst, die ausgewählt ist aus der Gruppe bestehend aus einem Material, das Katzenurin absorbiert, einem Material, das den Katzenausscheidungsgeruch hemmt, und einer Kombination davon.

12. Verfahren nach Anspruch 11, wobei die Komponente ausgewählt ist aus der Gruppe bestehend aus Tonen, Hölzern, landwirtschaftlichen Produkten, Kieselgelen und Kombinationen davon.

13. Verfahren nach Anspruch 12, wobei:
- die Tone ausgewählt sind aus der Gruppe bestehend aus nichtquellenden Tonen, quellenden Tonen, und Kombinationen davon;
- die Hölzer ausgewählt sind aus der Gruppe bestehend aus Zeder, Kiefer, Eiche, Ahorn, Eukalyptus, Pappel, Yukka und Kombinationen davon;
- die landwirtschaftlichen Produkte ausgewählt sind aus der Gruppe bestehend aus Sonnenblumensamen, Mandeln, Pistazie, Walnuss, Pekanuss, Haselnuss, Erdnuss, Eichel, Weizenfuttermehl, Weizenstroh und Kombinationen davon.

14. Kit, das Folgendes umfasst: (i) eine Komponente, die mindestens eines aus einer Katzenstreu oder einer Katzentoilette ist; und (ii) eine Zusammensetzung, die L-Felinin umfasst.

15. Kit nach Anspruch 14, die Folgendes umfasst
- eine erste Packung, die die Komponente enthält, und ferner umfassend eine zweite Packung, die die Zusammensetzung enthält, und wobei die erste Packung physisch der zweiten Packung zugeordnet ist; oder
- und eine Vorrichtung, die mindestens einen Teil der Zusammensetzung enthält und so konfiguriert ist, dass sie mindestens einen Teil der Zusammensetzung auf die Komponente aufbringt.

## Revendications

1. Litière pour chats comprenant de la L-félinine, et la litière pour chats ne contient pas d'urine de chat.

2. Litière pour chats selon la revendication 1, comprenant un composant choisi dans le groupe constitué d'argiles, bois, produits agricoles, gels de silice, et des combinaisons de ceux-ci.

3. Litière pour chats selon la revendication 2, dans laquelle les
- argiles sont choisies dans le groupe constitué d'argiles non gonflantes, argiles gonflantes, et des combinaisons de celles-ci ;
- les bois sont choisis dans le groupe constitué de cèdre, pin, chêne, érable, eucalyptus, tremble, yucca, et des combinaisons de ceux-ci ;
- les produits agricoles sont choisis dans le groupe constitué de graines de tournesol, amande, pistache, noix, noix de pécan, noisette, arachide, gland, brisures de blé, pailles de blé, et des combinaisons de ceux-ci.

4. Bac à litière comprenant de la L-félinine, et le bac à litière ne contient pas d'urine de chat, dans lequel au moins une partie de la L-félinine est positionnée sur une ou plusieurs surfaces du bac à litière.

5. Procédé de prévention d'une élimination hors du bac par un chat, le procédé comprenant l'utilisation de L-félinine pour inciter le chat à éliminer dans un bac à litière.

6. Procédé selon la revendication 5, dans lequel l'utilisation de la L-félinine pour inciter le chat à éliminer dans le bac à litière comprend au moins une action choisie dans le groupe de (i) positionnement d'un bac à litière comprenant au moins une partie de la L-félinine dans un bâtiment dans lequel réside le chat ; (ii) positionnement d'une litière comprenant au moins une partie de la L-félinine dans un bac à litière situé dans un bâtiment dans lequel réside le chat ; (iii) application d'une solution comprenant au moins une partie de la L-félinine sur une litière dans un bac à litière situé dans un bâtiment dans lequel réside le chat ; et (iv) application d'une poudre comprenant au moins une partie de la L-félinine sur une litière dans un bac à litière situé dans un bâtiment dans lequel réside le chat.

7. Procédé de traitement d'une élimination hors du bac, le procédé comprenant l'utilisation de L-félinine pour inciter un chat présentant un problème d'élimination hors du bac à éliminer dans un bac à litière.

8. Procédé selon la revendication 7, dans lequel l'utilisation de la L-félinine pour inciter le chat ayant le problème d'élimination hors du bac à éliminer dans le bac à litière comprend au moins une action choisie dans le groupe de (i) positionnement d'un bac à litière comprenant au moins une partie de la L-félinine dans un bâtiment dans lequel réside le chat ; (ii) positionnement d'une litière comprenant au moins une partie de la L-félinine dans un bac à litière situé dans un bâtiment dans lequel réside le chat ; (iii) application d'une solution comprenant au moins une partie de la L-félinine sur une litière dans un bac à litière situé dans un bâtiment dans lequel réside le chat ; et (iv) application d'une poudre comprenant au moins une partie de la L-félinine sur une litière dans un bac à litière situé dans un bâtiment dans lequel réside le chat.

9. Utilisation de L-félinine dans une litière pour chats pour empêcher ou réduire le risque d'une maladie de l'appareil urinaire inférieur chez un chat, dans lequel l'utilisation de la L-félinine pour inciter le chat à éliminer dans le bac à litière comprend au moins une action choisie dans le groupe de (i) positionnement d'un bac à litière comprenant au moins une partie de la L-félinine dans un bâtiment dans lequel réside le chat ; (ii) positionnement d'une litière comprenant au moins une partie de la L-félinine dans un bac à litière situé dans un bâtiment dans lequel réside le chat ; (iii) application d'une solution comprenant au moins une partie de la L-félinine sur une litière dans un bac à litière situé dans un bâtiment dans lequel réside le chat ; et (iv) application d'une poudre comprenant au moins une partie de la L-félinine sur une litière dans un bac à litière situé dans un bâtiment dans lequel réside le chat.

10. Utilisation selon la revendication 9, dans lequel la maladie de l'appareil urinaire inférieur est choisie dans le groupe constitué de bouchons urinaires, calculs de struvite ou d'oxalate, cystite idiopathique, reflux rénal, et des combinaisons de ceux-ci.

11. Procédé de fabrication d'une litière pour chats, le procédé comprenant la combinaison de L-félinine avec un composant choisi dans le groupe constitué d'un matériau qui absorbe l'urine de chat, un matériau qui combat les odeurs résultant de l'élimination par le chat, et une combinaison de ceux-ci.

12. Procédé selon la revendication 11, dans lequel le composant est choisi dans le groupe constitué d'argiles, bois, produits agricoles, gels de silice, et des combinaisons de ceux-ci.

13. Procédé selon la revendication 12, dans lequel les
- argiles sont choisies dans le groupe constitué d'argiles non gonflantes, argiles gonflantes, et des combinaisons de celles-ci ;
- les bois sont choisis dans le groupe constitué de cèdre, pin, chêne, érable, eucalyptus, tremble, yucca, et des combinaisons de ceux-ci ;
- les produits agricoles sont choisis dans le groupe constitué de graines de tournesol, amande, pistache, noix, noix de pécan, noisette, arachide, gland, brisures de blé, pailles de blé, et des combinaisons de ceux-ci.

14. Trousse comprenant (i) un composant qui est au moins l'un parmi une litière pour chats ou un bac à litière ; et (ii) une composition comprenant de la L-félinine.

15. Trousse selon la revendication 14, comprenant
- un premier conditionnement qui contient le composant et comprenant en outre un deuxième conditionnement qui contient la composition, et le premier conditionnement est physiquement associé au deuxième conditionnement ; ou
- un dispositif contenant au moins une partie de la composition et configuré pour appliquer au moins une partie de la composition sur le composant.
